# EUROPEAN PATENT APPLICATION

(11) **EP 3 677 780 A1**
(43) Date of publication of application: **08.07.2020**
(21) Application number: 18852165.2
(22) Date of filing: 11.06.2018
(51) Int. Cl.: F04C 2/10, F04C 15/00

(54) **OIL PUMP**

(30) Priority: 31.08.2017 CN 201710770530
(71) Applicant: Hangzhou Sanhua Research Institute Co., Ltd., Hangzhou, Zhejiang 310008 (CN)
(72) Inventor: LU, Jiangang, Zhejiang 310018 (CN); WU, Zhiwang, Zhejiang 310018 (CN); YIN, Bingjiu, Zhejiang 310018 (CN); ZHANG, Kai, Zhejiang 310018 (CN); ZHOU, Yubin, Zhejiang 310018 (CN)
(74) Representative: Lavoix
(86) International application number: PCT/CN2018/090552
(87) International publication number: WO 2019/041960

(57) **Abstract**

An oil pump (100) comprises a pump housing, a pump shaft (5), and a pump rotor assembly (8). The pump housing is capable of forming a pump cavity. The pump cavity comprises a first cavity (80) and a second cavity (90). The pump rotor assembly (8) is provided in the first cavity (80). At least part of the pump shaft (5) is provided in the second cavity (90). The pump rotor assembly (8) comprises a first rotor (81) and a second rotor (82). The first rotor (81) is capable of rotating the second rotor (82), and is fixedly connected to the pump shaft (5). The pump shaft (5) is capable of rotating the first rotor (81). The first rotor (81) comprises a connecting portion (812). A connecting hole (8123) is provided in the connecting portion (812). At least part of the pump shaft (5) is provided in the connecting hole (8123). At least part of the connecting portion (812) engages with at least part of the pump shaft (5). The configuration improves reliability of the connection between the pump shaft (5) and the first rotor (81), thereby facilitating transmission between the pump shaft (5) and the first rotor (81), and simplifying assembly of the pump shaft (5) and the first rotor (81).

## Description

The present application claims the priority to Chinese Patent Application No. 201710770530.8, titled "OIL PUMP", filed with the China National Intellectual Property Administration on August 31, 2017, which is incorporated herein by reference in its entirety.

### FIELD

The present application relates to the field of vehicles, and in particular to components of a vehicle lubrication system and/or a vehicle cooling system.

### BACKGROUND

The vehicle industry is developing rapidly. With the vehicle performance developing toward safer, more reliable, more stable, fully automated, intelligent and environment-friendly and energy saving, electric oil pumps are widely used in vehicle lubrication systems and/or vehicle cooling systems, and can well meet the market requirements.

The oil pump mainly provides power for the vehicle lubrication system and/or the vehicle cooling system. The oil pump includes a pump shaft and a pump rotor assembly, and the pump rotor assembly includes a first rotor and a second rotor. Generally, the oil shaft can drive the first rotor to rotate, and the first rotor can drive the second rotor to rotate. How to ensure the reliability of the connection between the pump shaft and the first rotor is an urgent problem to be solved.

### SUMMARY

An object of the present application is to provide an oil pump, which is advantageous for improving the reliability of the connection between the pump shaft and the first rotor.

In order to achieve the above object, the following technical solution is provided according to the present application.

An oil pump includes a pump housing, a pump shaft and a pump rotor assembly. The pump housing at least includes a first housing, a second housing and a third housing. The oil pump has a pump inner chamber, the pump inner chamber includes a first inner chamber and a second inner chamber, a side wall forming the first inner chamber includes part of the first housing and part of the second housing, and a side wall forming the second inner chamber includes part of the second housing and part of the third housing. The pump rotor assembly is accommodated in the first inner chamber. At least part of the pump shaft is arranged in the second inner chamber. The pump rotor assembly includes a first rotor, the first rotor is fixedly connected to the pump shaft, and the pump shaft can drive the first rotor to rotate. The first rotor includes a connecting portion, the connecting portion is formed with a connecting hole, at least part of the pump shaft is arranged in the connecting hole, and at least part of the connecting portion is in contact with part of the pump shaft.

The oil pump includes the pump shaft and the pump rotor assembly, the pump rotor assembly includes the first rotor, the first rotor includes the connecting portion, the connecting portion is formed with the connecting hole, at least part of the pump shaft is arranged in the connecting hole, and at least part of the connecting portion is in contact with part of the pump shaft, such an arrangement is advantageous for improving the reliability of the connection between the pump shaft and the first rotor.

### BRIEF DESCRIPTION OF THE DRAWINGS

Figure 1 is a schematic perspective view of a first embodiment of an oil pump according to the present application;
Figure 2 is a schematic sectional view of the first embodiment of the oil pump shown in Figure 1 taken along one direction;
Figure 3 is a schematic sectional view of the first embodiment of the oil pump shown in Figure 1 taken along another direction;
Figure 4 is a schematic top view of the first embodiment of the oil pump shown in Figure 1;
Figure 5 is a schematic top view of the oil pump that is not assembled with a first housing shown in Figure 1;
Figure 6 is a schematic front view of a pump rotor assembly shown in Figure 2;
Figure 7 is a schematic perspective view of a first embodiment of a first rotor shown in Figure 6;
Figure 8 is a schematic sectional view of the first rotor shown in Figure 7;
Figure 9 is a schematic perspective view of a first embodiment of a pump shaft housing shown in Figure 2 viewed from one direction;
Figure 10 is a schematic perspective view of a second embodiment of the first rotor shown in Figure 6;
Figure 11 is a schematic front view of the first rotor shown in Figure 10;
Figure 12 is a schematic sectional view of the first rotor shown in Figure 10;
Figure 13 is a schematic perspective view of a second embodiment of the pump shaft shown in Figure 2;
Figure 14 is a schematic front view of the pump shaft shown in Figure 13;
Figure 15 is a schematic sectional view of the pump shaft in Figure 14 taken along line A-A;
Figure 16 is a schematic perspective view of a third embodiment of the first rotor shown in Figure 6;
Figure 17 is a schematic perspective view of a third embodiment of the pump shaft shown in Figure 2;
Figure 18 is a schematic perspective view of a fourth embodiment of the first rotor shown in Figure 6;
Figure 19 is a schematic perspective view of a fourth embodiment of the pump shaft shown in Figure 2.

### DETAILED DESCRIPTION OF THE EMBODIMENTS

The present application is further illustrated hereinafter in conjunction with drawings and specific embodiments.

An oil pump in the present embodiment can provide a flow power for the working medium of the vehicle lubrication system and/or the vehicle cooling system, and can provide the flow power for the working medium of the lubrication system and/or the cooling system in a vehicle transmission system. Generally, oil pumps are classified into mechanical oil pumps and electric drive oil pumps. The present application is specifically described by taking the electric drive oil pump, abbreviated as electric oil pump, as an example.

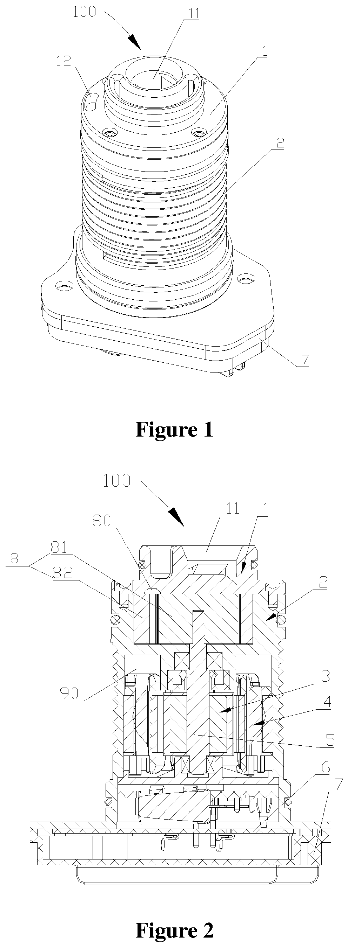

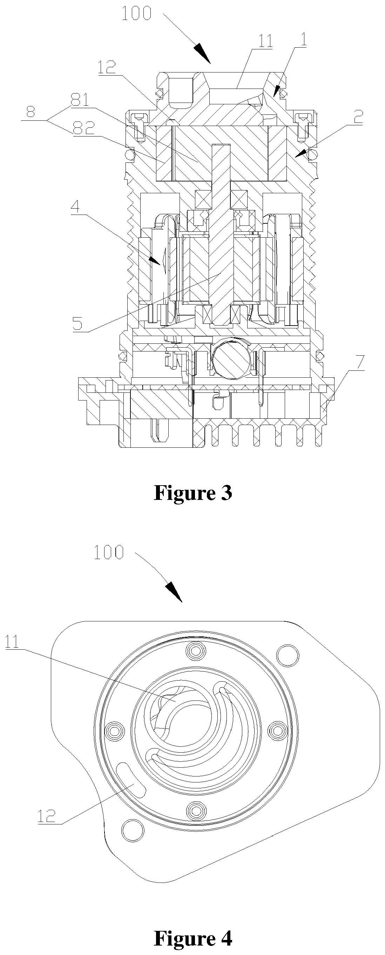

Referring to Figures 1 to 3, an electric oil pump 100 includes a pump housing, a motor rotor assembly 3, a stator assembly 4, a pump shaft 5, a pump rotor assembly 8 and an electronic control board 6. The pump housing is capable of forming a pump inner chamber. The motor rotor assembly 3, the stator assembly 4, the pump shaft 5, the pump rotor assembly 8 and the electronic control board 6 are arranged in the pump inner chamber. When is electric oil pump 100 is in operation, the circuit board assembly 6 controls the stator assembly 4 to generate a varying excitation magnetic field by controlling a current passing through the stator assembly 4 to change according to a certain rule, the motor rotor assembly 3 rotates under the action of the excitation magnetic field, and the motor rotor assembly 3 drives the pump rotor assembly 8 to rotate by the pump shaft 5. When the pump rotor assembly 8 rotates, a volume of the pump inner chamber changes, so that the working medium is extruded out to an oil outlet, thereby generating the power for flowing.

Referring to Figures 1 to 3, in the present embodiment, the pump housing includes a first housing 1, a second housing 2 and a third housing 7. The first housing 1, the second housing 2 and the third housing 7 are relatively fixedly connected. The pump housing is capable of forming the pump inner chamber, and the pump inner chamber includes a first inner chamber 80 and a second inner chamber 90. The working medium can flow through the first inner chamber 80, and the pump rotor assembly 8 is arranged in the first inner chamber 80. No working medium flows through the second inner chamber 90. The stator assembly 4, the motor rotor assembly 3 and the electronic control board 6 are arranged in the second inner chamber 90. Such an arrangement completely isolates the stator assembly 4 and the electronic control board 6 from the working medium, thereby ensuring that the performance of the stator assembly and the circuit board is not affected by the working medium.

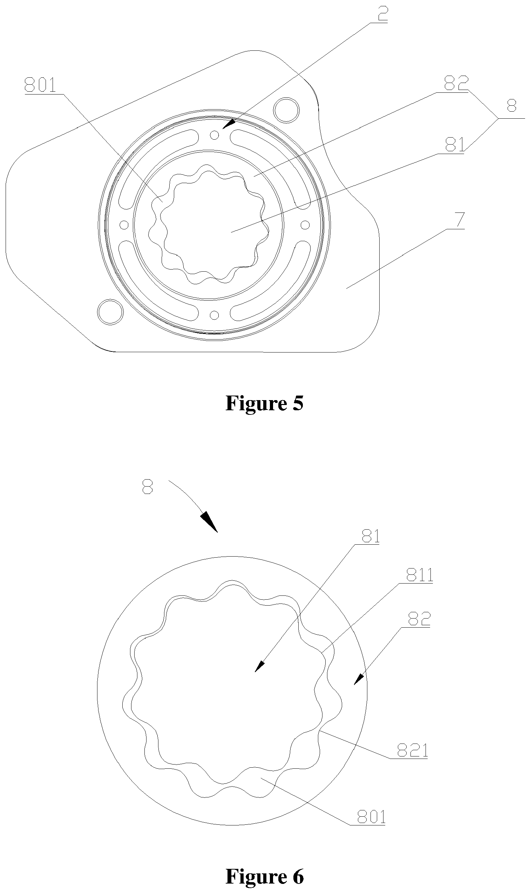

Referring to Figure 2 and Figure 5, in the present embodiment, the electric oil pump 100 includes the pump rotor assembly 8. The pump rotor assembly 8 includes a first rotor 81 and a second rotor 82, the first rotor 81 includes multiple external teeth, the second rotor 82 includes multiple internal teeth, and a hydraulic chamber 801 is formed between the internal teeth of the second rotor 82 and the external teeth of the first rotor 81. In the present embodiment, the second rotor 82 is sleeved on the circumference of the first rotor 81, and part of the internal teeth of the second rotor 82 are internally engaged with part of the external teeth of the first rotor 81. Referring to Figure 1 to Figure 5, the oil pump includes a oil inlet 11 and a oil outlet 12. The working medium can enter the hydraulic chamber 801 through the oil inlet 11, and can leave the hydraulic chamber 801 through the oil outlet 12. Since there is a certain eccentric distance between the first rotor 81 and the second 82, when the first rotor 81 rotates, part of the external teeth of the first rotor 81 engage with part of the internal teeth of the second rotor 82, thereby driving the second rotor 82 to rotate. The volume of the hydraulic chamber 801 changes during one cycle of the rotation of the pump rotor assembly 8. Specifically, when the pump rotor assembly 8 is rotated by a certain angle from a starting point, the volume of the hydraulic chamber 801 is gradually increased to form partial vacuum, and the working medium is sucked from the oil inlet 11 into the hydraulic chamber 801. When the pump rotor assembly continues rotating, the volume of the hydraulic chamber filled up with the working medium is gradually decreased, and the working medium is squeezed, so that the working medium entering the hydraulic chamber 801 is extruded out to the oil outlet 12, thereby generating the power for flowing. In the present embodiment, a communication cavity (not shown) is provided between the oil inlet 11 and the hydraulic chamber 801, and another communication cavity (not shown) is arranged between the oil outlet 12 and the hydraulic chamber 801. Such an arrangement buffers the working medium through the communication cavities, which is advantageous for damping vibration and noise.

Referring to Figure 1 to Figure 3, the first housing 1 is detachably connected to the second housing 2, and the second housing 2 is detachably connected to the third housing 7. In the present embodiment, the first housing 1 is connected to the second housing 2 through screws or bolts. Such an arrangement makes the assembly and disassembly of the oil pump more convenient, thereby facilitating the maintenance of the pump rotor of the oil pump. Apparently, the first housing 1 may be connected with the second housing 2 in other ways, for example, some detachable connection ways such as insertion, latching or etc. The second housing 2 is fixedly connected to the third housing 7. Specifically, the second housing 2 is connected to the third housing 7 through screws or bolts. Such an arrangement on the one hand makes the disassembly and assembly of the oil pump more convenient, thereby facilitating the maintenance of the electronic control board in the oil pump, and on the other hand makes the connection between the second housing 2 and the third housing 7 more reliable. Apparently, the second housing 2 may be connected with the third housing 7 in other detachable connection ways such as insertion, latching or etc.

Referring to Figure 6, the pump rotor assembly 8 includes the first rotor 81 and the second rotor 82. The first rotor 81 can drive the second rotor 82 to rotate. The first rotor 81 includes multiple external teeth 811, and the second rotor 82 includes multiple internal teeth 821. In the present embodiment, the second rotor 82 is sleeved on the circumference of the first rotor 81, and part of the external teeth 811 of the first rotor 81 are internally engaged with part of the internal teeth 821 of the second rotor during the rotation of the pump rotor assembly 8. The hydraulic chamber 801 is formed between the external teeth 811 of the first rotor and the internal teeth 821 of the second rotor. In the present embodiment, the number of the internal teeth 821 of the second rotor 82 is more than the number of the external teeth 811 of the first rotor 81 by one. Specifically, the number of the internal teeth of the second rotor 82 is 11, and the number of the external teeth of the first rotor 81 is 10. Apparently, the number of the internal teeth of the second rotor 82 and the number of the external teeth of the first rotor 81 may be other numbers. In the present embodiment, the second rotor 82 is not concentric with the first rotor 81, and there is a certain eccentric distance between the two rotors. Such an arrangement can ensure that part of the external teeth 811 of the first rotor 81 are always engaged with part of the internal teeth 821 of the second rotor 82 during the rotation of the pump rotor assembly 8, so that the volume of the hydraulic chamber 801 is changed, which facilitates suction and extrusion of the working medium, thereby achieving the flow of the working medium between the oil inlet 11 and the oil outlet 12.

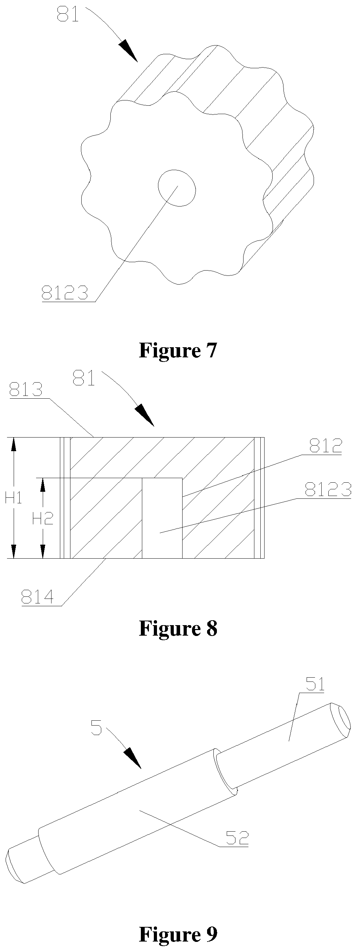

Referring to Figure 2, the first rotor 81 is fixedly connected with the pump shaft 5. The pump shaft 5 can drive the first rotor 81 to rotate. Referring to Figure 7 and Figure 8, the first rotor 81 includes a connecting portion 812, and the connecting portion 812 is formed with a connecting hole 8123. At least part of the pump shaft 5 shown in Figure 2 is arranged in the connecting hole 8123, and at least part of the pump shaft 5 shown in Figure 2 is in contact with at least part of the connecting portion 812. Such an arrangement, on the one hand, is advantageous for improving the reliability of the connection between the pump shaft 5 and the first rotor 81, thereby ensuring the transmission between the pump shaft 5 and the first rotor 81, and on the other hand, makes it easier to assemble the pump shaft 5 with the first rotor 81.

Referring to Figure 7 to Figure 9, Figures 7 to 8 are schematic structural views of a first embodiment of the first rotor. Figure 9 is a schematic structural view of a first embodiment of the pump shaft. Specifically, referring to Figure 7 to Figure 9, the first rotor 81 includes the connecting portion 812, the connecting portion 812 is formed with the connecting hole 8123, and a section of the connecting hole 8123 is substantially circular or D-shaped. The D-shaped connecting hole is specifically described in the following fourth embodiment. In the present embodiment, the section of the connecting hole 8123 is substantially circular, where the "substantially" refers to that the roundness is within a range of 0.3mm. Apparently, the section of the connecting hole 8123 may be D-shaped or in other shapes. The connecting portion 812 is arranged corresponding to at least part of the pump shaft 5, and the connecting portion 812 is in contact with the at least part of the pump shaft 5. Specifically, a sectional shape of an outer peripheral surface of the pump shaft 5 that is fitted with the connecting hole 8123 is also substantially circular or D-shaped. The D-shaped pump shaft is specifically described in the following fourth embodiment. A contact surface of the connecting portion 812 in contact with the pump shaft 5 is tightly fitted with a contact surface of the outer peripheral surface of the pump shaft 5 in contact with the connecting portion 812, that is, the contact surface of the connecting portion 812 in contact with the pump shaft 5 is in contact with the contact surface of the outer peripheral surface of the pump shaft 5 in contact with the connecting portion 812. Specifically, the contact surface of the connecting portion 812 in contact with the pump shaft 5 is in an interference fit or a transition fit with the contact surface of the outer peripheral surface of the pump shaft 5 in contact with the connecting portion 812. Referring to Figure 9, the pump shaft 5 includes a first shaft segment 51 and a second shaft segment 52, a diameter of the first shaft segment 51 is less than a diameter of the second shaft segment 52, at least part of the first shaft segment 51 is inserted into the connecting hole, and the connecting portion 812 is in contact with at least part of the outer peripheral surface of the first shaft segment 51 of the pump shaft 5.

Referring to Figure 8, the first rotor 81 includes an upper surface 813 and a lower surface 814. The lower surface 814 is a support surface, and the support surface is capable of supporting the first rotor 81 in the oil pump. In an axial direction of the first rotor 81, a first distance H1 is defined as a distance between the lower surface 814 located at a central axis of the first rotor 81 and the upper surface 813 located at the central axis of the first rotor 81. The first distance H1 is a thickness of the first rotor 81 along the central axis. A depth H2 of the connecting hole 8123 is less than or equal to the first distance HI, where the "depth of the connecting hole 8123" refers to a depth along a central axis of the connecting portion 812. In the present embodiment, the connecting hole 8123 is a blind hole, the connecting hole 8123 extends axially from the lower surface 814 to the upper surface 813, and the connecting hole 8123 does not penetrate through the upper surface 813, such that the working medium in the first inner chamber 80 shown in Figure 2 cannot flow into the second inner chamber 90 through the connecting hole 8123, and the performance of components accommodated in the second inner chamber 90 is not affected. Specifically, a ratio of the depth H2 of the connecting hole 813 to the first distance H1 is greater than or equal to one third. Such an arrangement is advantageous for increasing a contact area of a fitting surface when the connecting portion 812 is in contact with the first rotor 81, thereby improving the reliability of the connection between the pump shaft 5 and the first rotor 81.

The connecting portion includes a first position-limiting portion and a first sub-portion, the pump shaft includes a second position-limiting portion and a second sub-portion, the first position-limiting portion is matched in shape with the second position-limiting portion, at least part of the first position-limiting portion is in a transition fit or an interference fit with at least part of the second position-limiting portion, and the first sub-portion is in a clearance fit with the second sub-portion, which is specifically described by the following embodiments.

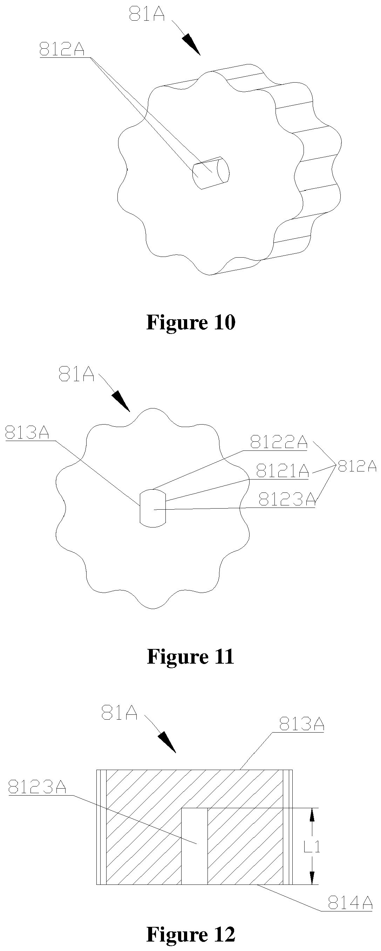

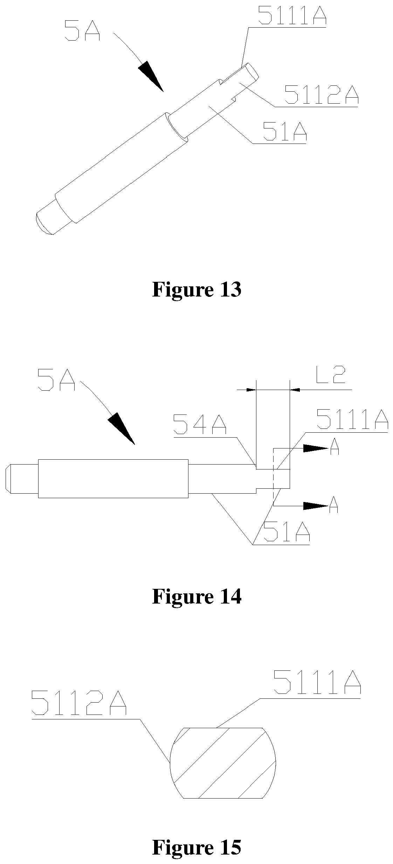

Referring to Figure 10 to Figure 15, Figures 10 to 12 are schematic structural views of a second embodiment of the first rotor. Figures 13 to 15 are schematic structural views of a second embodiment of the pump shaft. Specifically, referring to Figure 10 to Figure 15, a connecting portion 812A is substantially elongated groove shaped, the connecting portion 812A is formed with a connecting hole 8123A, the connecting portion 812A includes two first position-limiting portions 8121A, a pump shaft 5A includes a first shaft segment 51A and a second shaft segment 52A, a diameter of the second shaft segment 52A is greater than a diameter of the first shaft segment 51A, at least part of the first shaft segment 51A is inserted into the connecting hole 8123A, at least part of the first shaft segment 51A is in contact with at least part of the connecting portion 812A, the pump shaft further includes two second position-limiting portions 5111A, the second position-limiting portions 5111A are arranged on the first shaft segment 51A, the first position-limiting portions 8121A are matched in shape with the second position-limiting portions 5111A, and the first position-limiting portions 8121A are in contact with the second position-limiting portions 5111A, such that the pump shaft can be reliably connected with the first rotor through the contact arrangement of the first position-limiting portions 8121A and the second position-limiting portions 5111A, thereby facilitating the transmission between the pump shaft 5A and the first rotor 81A.

Referring to Figure 11 and Figure 15, the connecting portion 812A includes two first sub-portions 8122A, the two first sub-portions 8122A are respectively arranged at two ends of the first position-limiting portions 8121A, the pump shaft 5A includes two second sub-portions 5112A, and the second sub-portions 5112A are arranged on the first shaft segment 51A. Specifically, the second sub-portions 5112A are respectively arranged on two ends of two adjacent second position-limiting portions 5111A. When the pump shaft 5A is assembled with the first rotor 81A, the first sub-portions 8122A are matched in shape with the second sub-portions 5112A, and the first sub-portions 8122A are in a clearance fit with the second sub-portions 5112A. Such an arrangement, on the one hand, allows the first rotor and the pump shaft to self-align through a clearance between the first rotor 81A and the pump shaft 5A so as to ensure that the first rotor and the pump shaft meet the coaxial accuracy requirement, and on the other hand, makes it easier to assemble the pump shaft 5A with the first rotor 81A.

The first position-limiting portion 8121A includes a planar portion 813A. A first reference plane is defined, a center line of the first rotor 81A is in the first reference plane, the first reference plane is parallel to the planar portion 813A, and the two first position-limiting portions 8121A are respectively arranged on two sides of the first reference plane. A second reference plane is defined, the center line of the first rotor 81A is in the second reference plane, the second reference plane is perpendicular to the first reference plane, and the two first sub-portions 8122A are respectively arranged on two sides of the second reference plane. In the present embodiment, the two position-limiting portions 8121A are planar, where the "planar" refers to that the flatness is less than or equal to about 0.3mm. The two first position-limiting portions 8121A are symmetrically arranged with respect to the first reference plane. All of the first position-limiting portions 8121A are in contact with all of the second position-limiting portions 5111A, and are tightly fitted with all of the second position-limiting portions. The two first sub-portions 8122A and the two second sub-portions 5112A are arc-shaped, the two first sub-portions 8122A are symmetrically arranged with respect to the second reference plane, such that the section of the connecting hole 8123A is oblong. Such an arrangement allows the centerlines of the pump shaft and the first rotor to substantially coincide with each other after the pump shaft is assembled with the first rotor, which is advantageous for improving the coaxiality of the pump shaft 5A and the first rotor 81A. A third reference plane is defined, and the third reference plane passes through a central axis of the second shaft segment 52A and a connection line of midpoints of the two second sub-portions 5112A. In the present embodiment, the two second position-limiting portions 5111A are symmetrically arranged with respect to the third reference plane. Specifically, the two second position-limiting portions 5111A are arranged in parallel with each other. Apparently, the two second position-limiting portions 5111A may be arranged at a certain angle.

Referring to Figure 13, the first shaft segment 51A of the pump shaft 5A further includes a shaft shoulder 54A. Referring to Figure 2 and Figure 12, the shaft shoulder 54A abuts against a lower surface 814A of the first rotor 81A. Such an arrangement can ensure that the first rotor and the pump shaft are position-limited in the axial direction through the shaft shoulder during the assembly process, which on the one hand can ensure that the second position-limiting portions 5111A of the pump shaft 5A are arranged completely corresponding to the first position-limiting portions 8121A of the first rotor 81A, and on the other hand, can determine whether the pump shaft is fully assembled in position through a distance between the shaft shoulder 54A and the lower surface 814A of the first rotor 81A.

Referring to Figure 10 to Figure 15, in the present embodiment, a length L1 of the first position-limiting portion 8121A is less than or equal to a length of the second position-limiting portion 5111A. The "length L1 of the first position-limiting portion 8121A" refers to a vertical distance between the lower surface 814A of the first rotor 81A and an end position of the first position-limiting portion 8121A along the central axis of the first rotor 81A. The "length of the second position-limiting portion 5111A" refers to a vertical distance between a beginning position of the second position-limiting portion 5111A to an end position of the second position-limiting portion 5111A along the central axis of the pump shaft 5A. Such an arrangement allows a surface of the second position-limiting portion 5111A to be in complete contact with a surface of the first position-limiting portion 8121A, thereby ensuring enough contact area between the first position-limiting portion and the second limiting portion, facilitating the fixation of the pump shaft, and further improving the reliability of the connection between the pump shaft and the first rotor.

Other features of the second embodiment of the first rotor and the pump shaft are substantially the same as those of the first embodiment, which will not be repeated herein again. In the present embodiment, the connecting portion 812A of the first rotor 81A is substantially elongated groove shaped, at least part of the connecting portion 812A of the first rotor 81A is in contact with the pump shaft 5A, and at least part of the connecting portion 812A is in a clearance fit with the pump shaft 5A. Compared with the first embodiment of the first rotor and the pump shaft, such an arrangement on the one hand allows a press-assembling force required for assembling the first rotor and the pump shaft to be much smaller than that in the first embodiment, thereby facilitating the assembly, and on the other hand, allows the first rotor and the pump shaft to self-align during the rotation process through the clearance between the first rotor and the pump shaft so as to ensure that the first rotor and the pump shaft meet the coaxial accuracy requirement. Further, compared with the first embodiment of the first rotor and the pump shaft, in the present embodiment, the transmission between the first rotor and the pump shaft is more reliable, and even if the surface of the pump shaft wears, the pump shaft does not run idly, and the pump shaft does not lose the ability to drive the first rotor to rotate.

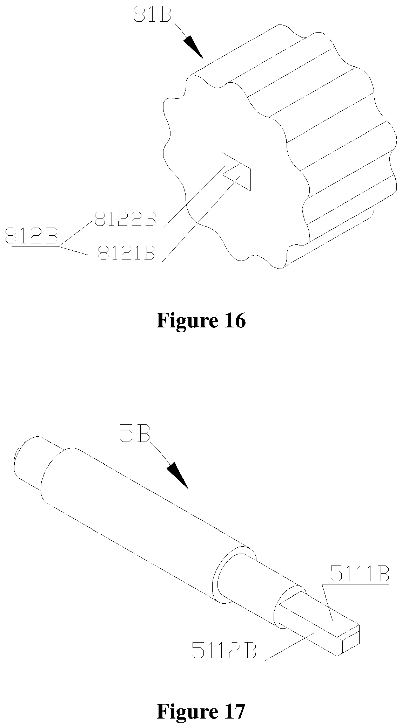

Referring to Figure 16 and Figure 17, Figure 16 is a schematic structural view of a third embodiment of the first rotor, and Figure 17 is a schematic structural view of a third embodiment of the pump shaft. In the present embodiment, a connecting hole formed by a connecting portion 812B of a first rotor 81B is substantially rectangle. Apparently, the connecting hole may be square or trapezoid. Surfaces of two first position-limiting portions 8121B of the first rotor 81B and surfaces of second position-limiting portions 5111B of a pump shaft 5B are planar, and the two first position-limiting portions 8121B are in contact with the second position-limiting portions 5111B. Surfaces of two sub-portions 8122B of the first rotor 81B and two sub-portions 5112B of the pump shaft 5B are planar, and the two first sub-portions 8122B are in a clearance fit with the two second sub-portions 5112B. Other features of the present embodiment are substantially same as those of the first and second embodiments of the first rotor and the pump shaft, which will not be repeated herein again. Compared with the second embodiment, in the present embodiment, the first sub-portions 8122B of the first rotor 81B and the second sub-portions 5112B of the pump shaft 5B are planar. Such an arrangement on the one hand facilitates the assembly of the first rotor 81B and the pump shaft 5B as well, and on the other hand, allows the first rotor and the pump shaft to self-align during the rotation process through the clearance between the first sub-portions 8122B and the second sub-portions 5112B so as to ensure that the first rotor and the pump shaft meet the coaxial accuracy requirement.

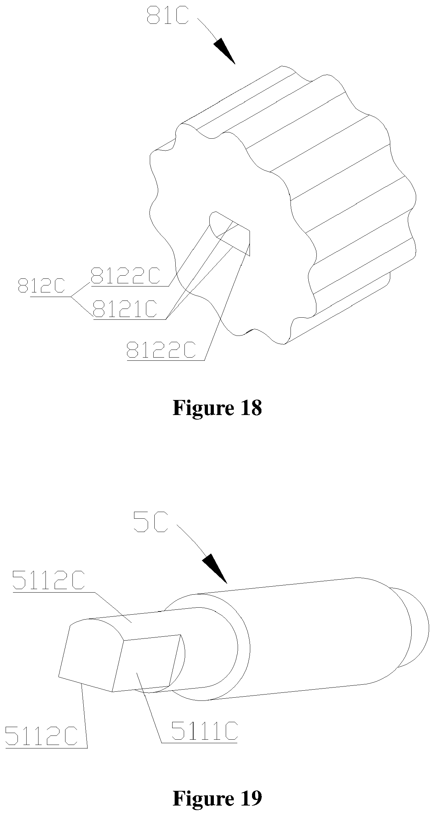

Referring to Figure 18 and Figure 19, Figure 18 is a schematic structural view of a fourth embodiment of the first rotor, and Figure 19 is a schematic structural view of a fourth embodiment of the pump shaft. In the present embodiment, a section of the connecting hole is substantially D-shaped, a section of the outer peripheral surface of the pump shaft fitted with the connecting hole is substantially D-shaped, and a contact surface of the connecting portion in contact with the pump shaft is tightly fitted with a contact surface of the outer peripheral surface of the pump shaft in contact with the connecting portion. Specifically, referring to Figure 18 and Figure 19, a first rotor 81C includes a connecting portion 812C, the connecting portion 812C is formed with a connecting hole, and a section of the connecting hole is substantially D-shaped, where the "D-shape" refers to a closed graph formed by a segment of a first sub-portion 8122C formed by an arc segment, a segment of the first sub-portion 8122C formed by a straight segment, and a first position-limiting portion 8121C formed by two straight segments, and the two first sub-portions 8122C are oppositely arranged. Apparently, the "D-shape" herein may be a closed graph formed by a segment of the first sub-portion 8122C formed by an arc segment and another segment of the first sub-portion 8122C formed by the straight segments. In this case, the segment of the first sub-portion 8122C formed by the arc segment and the segment of the first sub-portion 8122C formed by the straight segment are tightly fitted with a pump shaft having a corresponding shape. In Figure 19, a section of the outer peripheral surface of the pump shaft 5C fitted with the connecting hole is also substantially D-shaped, where the "D-shape" refers to a closed graph formed by a segment of a second sub-portion 5112C formed by an arc segment, a segment of the second sub-portion 5112C formed by a straight segment, and two segments of a second position-limiting portion 5111C formed by the straight segments. Apparently, the "D-shaped" herein may be a closed graph formed by a segment of the second sub-portion 5112C formed by the arc segment and another segment of the second sub-portion 5112C formed by the straight segments. Specifically, in the present embodiment, surfaces of two first position-limiting portions 8121C of the first rotor 81C and surfaces of the second position-limiting portions 5111C of the pump shaft 5C are planar, the two first position-limiting portions 8121C are in contact with the second position-limiting portions 5111C, a surface of one of the two first sub-portions 8122C of the first rotor 81C is arc-shaped, a surface of the other first sub-portion 8122C is planar, and the shape of surfaces of the two second sub-portions 5112C of the pump shaft 5C corresponds to that of the two first sub-portions, that is, a surface of one of the second sub-portions 5112C is arc-shaped, and a surface of the other second sub-portion 5112C is planar. The two first sub-portions 8122C are in a clearance fit with the two second sub-portion 5112C. Other features of the present embodiment are substantially the same as those of the first and second embodiments of the first rotor and the pump shaft, which will not be repeated herein again. Compared with the second embodiment, one of the two first sub-portions 8122C of the first rotor in the present embodiment is planar, and the other one is arc-shaped, which facilitates the assembly of the first rotor and the pump shaft as well, and on the other hand, allows the first rotor and the pump shaft to self-align during the rotation process through the clearance between the first sub-portions and the second sub-portions so as to ensure that the first rotor and the pump shaft meet the coaxial accuracy requirement.

It should be understood that the above embodiments are only intended to illustrate the present application and not to limit the technical solutions described in the present application. Although the present specification has been described in detail with reference to the embodiments described above, it should be understood by those skilled in the art that, various modifications and equivalents can be made to the technical solutions of the present application without departing from the spirit and scope of the present application, all of which should be contained within the scope of the claims of the present application.

## Claims

1. An oil pump, comprising a pump housing, a pump shaft and a pump rotor assembly, wherein
the pump housing at least comprises a first housing, a second housing and a third housing, the oil pump has a pump inner chamber, the pump inner chamber comprises a first inner chamber and a second inner chamber, a side wall forming the first inner chamber comprises part of the first housing and part of the second housing, and a side wall forming the second inner chamber comprises part of the second housing and part of the third housing;
the pump rotor assembly is accommodated in the first inner chamber, and at least part of the pump shaft is arranged in the second inner chamber; and
the pump rotor assembly comprises a first rotor, the first rotor is fixedly connected to the pump shaft, the pump shaft is configured to drive the first rotor to rotate, the first rotor comprises a connecting portion, the connecting portion is formed with a connecting hole, at least part of the pump shaft is arranged in the connecting hole, and at least part of the connecting portion is tightly fitted with at least part of the pump shaft.

2. The oil pump according to claim 1, wherein
a section of the connecting hole is approximately circular, a section of an outer peripheral surface of the pump shaft fitted with the connecting hole is substantially circular, and a contact surface of the connecting portion in contact with the pump shaft is tightly fitted with a contact surface of the outer peripheral surface of the pump shaft in contact with the connecting portion; or
the section of the connection hole is substantially D-shaped, the section of the outer peripheral surface of the pump shaft fitted with the connecting hole is substantially D-shaped, and the contact surface of the connecting portion in contact with the pump shaft is tightly fitted with the contact surface of the outer peripheral surface of the pump shaft in contact with the connecting portion.

3. The oil pump according to claim 1, wherein the connecting portion comprises a first position-limiting portion and a first sub-portion, the pump shaft comprises a second position-limiting portion and a second sub-portion, the connecting portion is matched in shape with the pump shaft, at least part of the first position-limiting portion is in contact with at least part of the second position-limiting portion, and the first sub-portion is in a clearance fit with the second sub-portion.

4. The oil pump according to claim 3, wherein the connecting portion comprises two first position-limiting portions and two first sub-portions, the two position-limiting portions are arranged in parallel, and the two first sub-portions are respectively arranged at two ends of the first position-limiting portions.

5. The oil pump according to claim 4, wherein
each of the two first position-limiting portions comprises a planar portion, a first reference plane is defined, a center line of the first rotor is in the first reference plane, the first reference plane is in parallel with the planar portion, the two first position-limiting portions are respectively arranged on two sides of the first reference plane; and
a second reference plane is defined, the center line of the first rotor is in the second reference plane, the second reference plane is perpendicular to the first reference plane, and the two first sub-portions are respectively arranged on two sides of the second reference plane.

6. The oil pump according to claim 5, wherein the two first position-limiting portions are both planar, the two first position-limiting portions are symmetrically arranged with respect to the first reference plane, and the two first position-limiting portions are in contact with the two second position-limiting portions respectively, and are tightly fitted with all of the second position-limiting portions.

7. The oil pump according to claim 6, wherein the two first sub-portions are both arc-shaped, and the two first sub-portions are symmetrically arranged with respect to the second reference plane.

8. The oil pump according to any one of claims 3 to 7, wherein the pump shaft comprises a first shaft segment and a second shaft segment, a diameter of the second shaft segment is greater than a diameter of the first shaft segment, at least part of the first shaft segment is inserted into the connecting hole, and at least part of an outer peripheral surface of the first shaft segment is in contact with at least part of the connecting portion.

9. The oil pump according to claim 8, wherein the pump shaft comprises two second position-limiting portions and two second sub-portions, the two second position-limiting portions and the two second sub-portions are arranged on the first shaft segment, a third reference plane which passes through a central axis of the second shaft segment and a connection line of midpoints of the two second sub-portions is defined, and the two second position-limiting portions are symmetrically arranged with respect to the third reference plane.

10. The oil pump according to any one of claims 1 to 7, wherein the first rotor comprises an upper surface and a lower surface, the connecting hole is extended axially from the lower surface to the upper surface, and in an axial direction of the first rotor, a first distance is defined as a distance between the lower surface located at the central axis of the first rotor and the upper surface located at the central axis of the first rotor, and a depth of the connecting hole is less than or equal to the first distance.

11. The oil pump according to claim 8, wherein the first rotor comprises an upper surface and a lower surface, the connecting hole is extended axially from the lower surface to the upper surface, and in an axial direction of the first rotor, a first distance is defined as a distance between the lower surface located at the central axis of the first rotor and the upper surface located at the central axis of the first rotor, and a depth of the connecting hole is less than or equal to the first distance.

12. The oil pump according to claim 9, wherein the first rotor comprises an upper surface and a lower surface, the connecting hole is extended axially from the lower surface to the upper surface, and in an axial direction of the first rotor, a first distance is defined as a distance between the lower surface located at the central axis of the first rotor and the upper surface located at the central axis of the first rotor, and a depth of the connecting hole is less than or equal to the first distance.

13. The oil pump according to claim 10, wherein the connecting hole is a blind hole, the connecting hole does not penetrate through the upper surface, and a ratio of the depth of the connecting hole to the first distance is greater than or equal to one third.

14. The oil pump according to claim 11, wherein the connecting hole is a blind hole, the connecting hole does not penetrate through the upper surface, and a ratio of the depth of the connecting hole to the first distance is greater than or equal to one third.

15. The oil pump according to claim 12, wherein the connecting hole is a blind hole, the connecting hole does not penetrate through the upper surface, and a ratio of the depth of the connecting hole to the first distance is greater than or equal to one third.
